# EUROPÄISCHE PATENTSCHRIFT

(11) **EP 1 831 096 B1**
(45) Veröffentlichungstag und Bekanntmachung des Hinweises auf die Patenterteilung: **06.08.2008**
(21) Anmeldenummer: 05812679.8
(22) Anmeldetag: 02.12.2005
(51) Int. Cl.: B66F 9/14, B65G 1/04

(54) **VERFAHREN UND VORRICHTUNG ZUM MANIPULIEREN ZUMINDEST EINES STÜCKGUTES**
METHOD AND DEVICE FOR MANIPULATING AT LEAST ONE UNIT LOAD
PROCEDE ET DISPOSITIF POUR MANIPULER AU MOINS UN ARTICLE

(30) Priorität: 02.12.2004 AT 20312004; 15.12.2004 AT 21042004
(43) Veröffentlichungstag der Anmeldung: 12.09.2007
(73) Patentinhaber: TGW Mechanics GmbH, 4600 Wels (AT)
(72) Erfinder: HANSL, Rudolf, 4020 Linz (AT); WOLKERSTORFER, Christoph, 4174 Niederwaldkirchen (AT)
(74) Vertreter: Secklehner, Günter
(86) Internationale Anmeldenummer: PCT/AT2005/000481
(87) Internationale Veröffentlichungsnummer: WO 2006/058355

(56) Entgegenhaltungen:
- WO-A-03/004385
- DE-A1- 10 140 643
- DE-U1-0202004 004 62

## Beschreibung

Die Erfindung betrifft ein Verfahren und eine Vorrichtung zum Manipulieren zumindest eines Stückgutes zwischen einer Einlager- und Auslagerseite mittels einer Lastaufnahmevorrichtung, wie sie in den Oberbegriffen der Ansprüche 1 und 5 beschrieben sind, und durch das Dokument DE 20 2004 004 620 U1 bekannt sind.

Derartige Verfahren zum Manipulieren zumindest eines Ladehilfsmittels werden möglicherweise bei einem Förderfahrzeug, vor allem einem Regalbediengerät mit einer Lastaufnahmevorrichtung, eingesetzt. Die Lastaufnahmevorrichtung ist zumeist in mehreren Raumrichtungen gegenüber feststehenden Regalen oder vorgeschalteten und nachgeschalteten Fördereinrichtungen relativ verstellbar. Vorzugsweise weist das Regalbediengerät einen auf einer vertikal verstellbaren Hubplattform gelagerten Teleskoptisch auf, mit welchem das Lastaufnahmemittel relativ zu Regalen verstellt werden kann. Bei Hochleistungskommissionieranlagen werden beispielsweise schnelle Regalbediengeräte eingesetzt, die z.B. Lastaufnahmevorrichtungen mit Einfachteleskop und beidseitig einfacher Lagerung aufweisen. Die Bewegungen des Regalbediengerätes in zumindest drei Raumrichtungen sowie der Lastaufnahmevorrichtung erfolgt üblicherweise mit Servoantrieben, die extrem hohe Beschleunigungen und Verzögerungen durchführen können. Das Ladehilfsmittel wird von einer Einlagerseite auf einer Seite des Regalbediengerätes auf eine Auslagerseite auf der gegenüberliegenden Seite des Regalbediengerätes verlagert. Dazu wird die Lastaufuahmevorrichtung in Richtung der Ein- bzw. Auslagerseite verfahren, um einen Behälter von einer Auslagerseite mit der Lastaufnahmevorrichtung zu übernehmen oder auf eine Einlagerseite abzulegen. Durch die extremen Beschleunigungen und Verzögerungen bei der Bewegung der Lastaufnahmevorrichtung bedarf es zusätzlicher aufwendiger Vorrichtungen, um das Ladehilfsmittel auf der Lastaufnahmevorrichtung zu halten. Dazu kommt, dass beim Auslagern eines Ladehilfsmittels, z.B. eines Behälters, beispielsweise in einer Vorzone dieses über die Lastaufnahmevorrichtung durch Ausfahren des Teleskops auf eine Fördereinrichtung abgesenkt wird. Anschließend wird die Lastaufnahmevorrichtung in die Mittelstellung und von dort in die Übernahmeposition im Bereich der gegenüberliegenden Einlagerseite verstellt. Von dort wird ein neues Lasthilfsmittel aufgenommen und in die Mittellage der Lastaufnahmevorrichtung verfahren und anschließend in einem freien Platz im Lager eingelagert. Der Nachteil dieser Lösung liegt in einer hohen Spielzeit der Lastaufuahmevorrichtung, da sie für jede einzelne Behälterbewegung ausgefahren, hochgehoben, eingefahren und abgesenkt werden muss.

Der vorliegenden Erfindung liegt die Aufgabe zugrunde, ein Verfahren und eine Vorrichtung zum Manipulieren zumindest eines Ladehilfsmittels zu schaffen, bei dem eine gesicherte Manipulation bei optimierter Spielzeit bei der Bewegung von Stückgütern zwischen einer Einlagerseite und einer Auslagerseite erzielt wird.

Diese Aufgabe der Erfindung wird beim Verfahren durch die Maßnahmen im Anspruch 1 gelöst. Vorteilhaft ist hierbei, dass voreinstellbare, jedoch während des Betriebes fixe Endanschläge vorgesehen sein können, und die Positionierung des Lasthilfsmittels während der schnellen Bewegung der Transporteinrichtung in Ein- bzw. Auslagerrichtung - die üblicherweise als Z-Richtung bezeichnet wird - erzielt wird. Dies erfolgt durch eine Höhenverstellbarkeit der Aufnahmeebene relativ zur Transporteinrichtung und zu den auf dieser angeordneten Endanschlägen. Damit kann das Ladehilfsmittel während der schnellen Bewegung zwischen den Enden stellenpositioniert gehalten und in der Transportposition der Aufnahmefläche ohne Behinderung durch die Endanschläge in Richtung der Einlager- bzw. Auslagerseite mit der Transporteinrichtung und relativ zur Aufnahmefläche verlagert werden.

Weitere vorteilhafte Maßnahmen zur Durchführung des Verfahrens sind den weiteren Ansprüchen und der dazugehörigen speziellen Beschreibung zu entnehmen.

Die erfindungsgemäße Aufgabe kann aber auch durch die Vorrichtung nach Anspruch 5 gelöst werden. Der Vorteil hierbei ist, dass während des Betriebes feststehende Endanschläge verwendet werden können. Diese können selbstverständlich auf unterschiedliche Höhen voreinstellbar sein. Gleichzeitig wird damit aber erreicht, dass in Verbindung mit den zuvor beschriebenen Verfahren bzw. entsprechender Funktion der Vorrichtung durch eine Verstellung der Aufnahmeebene zwischen der Transportposition und der Feststellposition ein Ladehilfsmittel zur Aufnahmeebene zugeführt und ein anderes Ladehilfsmittel von der Aufnahmeebene auf eine Auslagerseite bzw. Position abgeschoben werden kann. Damit wird die Spielzeit für einen durchgehenden Behälterwechsel von einer Aufnahmeebene auf eine Einlagerseite und von einer Auslagerseite auf eine Aufnahmeebene der Lageraufnahmevorrichtung erheblich beschleunigt und kann damit eine höhere Leistung bei der Kommissionierung mit dem erfindungsgemäßen Verfahren und der Vorrichtung zum Manipulieren eines Ladehilfsmittels erreicht werden.

Vorteilhaft sind dabei Ausbildungen, wie in den Ansprüchen 6 bis 8 gekennzeichnet, wodurch das Ladehilfsmittel bzw. Stückgut von einer Transportebene des Ablieferförderers und/oder Zulieferförderers anhebbar ist, wodurch die teleskopierbare Transportvorrichtung, insbesondere ein Oberschlitten, mit auf diesen angeordneten Endanschlägen, das Stückgut direkt unterfahren und aufnehmen kann, um es auf die Lastaufnahmevorrichtung des Förderfahrzeuges zu übernehmen, und damit eine exakte Positionierung und Reduktion der Spielzeit durch die Möglichkeit von hohen Beschleunigungen in den Verstellbewegungen der Transportvorrichtung erreicht wird.

Vorteilhafte Ausbildungen beschreiben aber auch die Ansprüche 9 bis 14, wodurch eine betriebssichere Einrichtung bei einfacher Bauweise und kostengünstiger Realisierung errecht wird und eine Aufnahmeebene für das Stückgut sehr rasch an die vorzunehmende Manipulation anpassbar ist und darüber hinaus das Stückgut in jeder Bewegungsrichtung der Lastaufnahmevorrichtung bzw. des Förderfahrzeuges in gesicherter Lager positioniert ist.

Gemäß den in den Ansprüchen 15 und 16 wiedergegebenen vorteilhaften Ausbildungen wird eine kurze Spielzeit für die Stückgutmanipulation zwischen einem Regalsystem und den vorgeordneten Fördereinrichtungen erreicht.

Die im Anspruch 17 vorteilhafte Ausbildung ermöglicht eine Anpassung der Transporteinrichtung an unterschiedliches Stückgut.

Schließlich ist auch die Ausbildung nach Anspruch 18 vorteilhaft, weil dadurch eine Auflagerung des Stückgutes im Randbereich seitlich des Oberschlittens erreicht wird und damit die Kippsicherheit gewährleistet ist.

Die Erfindung wird im nachfolgenden anhand der in den Zeichnungen dargestellten Ausführungsbeispiele näher erläutert.

Es zeigen:
- Fig. 1: eine Draufsicht auf eine Vorzone eines Lagersystems;
- Fig. 2a bis 2d: eine erste Ausführung des Verfahrens zum Manipulieren zumindest eines Ladehilfsmittels zwischen einer Einlager- und einer Auslagerseite mittels einer zwischen einer ersten und zweiten Fördereinrichtung positionierten Lastaufnahmevorrichtung;
- 3a bis 3e: eine weitere Ausführung des erfindungsgemäßen Verfahrens zum Manipulieren von zwei Ladehilfsmitteln zwischen einer Einlager- und Auslagerseite mittels einer zwischen der ersten und zweiten Fördereinrichtung positionierten Lastaufnahmevorrichtung;
- Fig. 4: einen Querschnitt durch die erfindungsgemäße Vorrichtung mit einer Lastaufnahmevorrichtung mit einer Transporteinrichtung und einem in die abgesenkte Ruhestellung befindlichen Traggestell einer Trageinrichtung;
- Fig. 5: einen Querschnitt durch die erfindungsgemäße Vorrichtung mit einer Transporteinrichtung und einem in die angehobene Betätigungsstellung befindlichen Traggestell einer Trageinrichtung;
- Fig. 6: einen Querschnitt durch die erfindungsgemäße Vorrichtung mit zwei Lastaufnahmevorrichtungen mit jeweils einer Transporteinrichtung und einem in die abgesenkte Ruhestellung befindlichen Traggestell einer Trageinrichtung;
- Fig. 7: einen Querschnitt durch die erfindungsgemäße Vorrichtung mit zwei Lastaufnahmevorrichtungen mit jeweils einer Transporteinrichtung und einem in die angehobene Betätigungsstellung befindlichen Traggestell einer Trageinrichtung;
- Fig. 8: eine andere Ausbildung der erfindungsgemäßen Vorrichtung in der Vorzone, geschnitten gemäß den Linien VIII - VIII in Fig. 1;
- Fig. 9: die Vorrichtung, geschnitten gemäß den Linen IX -1X in Fig. 8.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

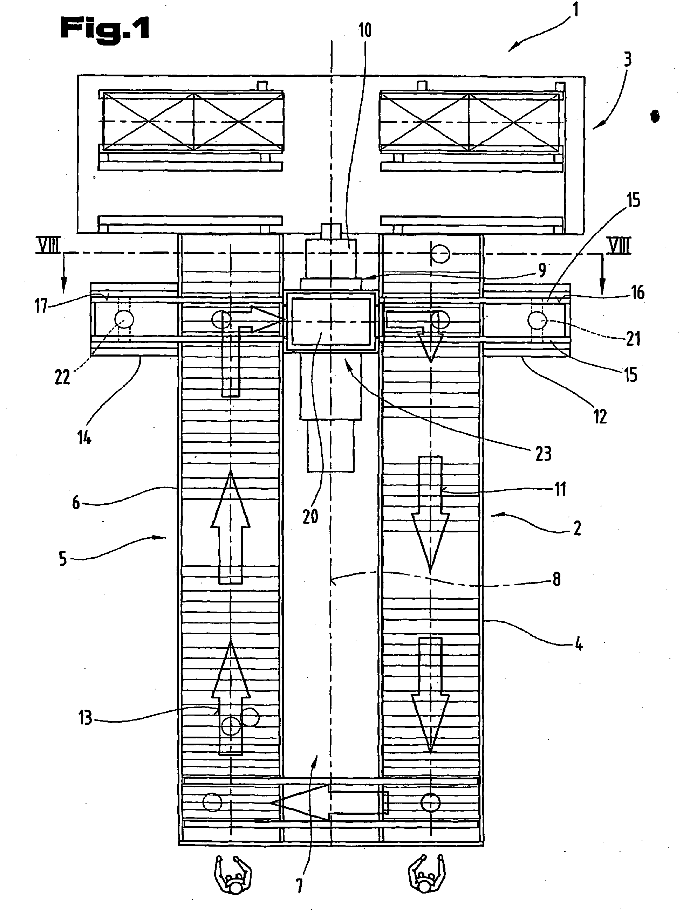

In Fig. 1 ist eine Draufsicht auf ein Lagersystem 1 in der Vorzone gezeigt. Das Lagersystem 1 umfasst einen auf einer Auslagerseite 2 eines Regalsystems 3 angeordneten Ablieferförderer 4, einen auf einer Einlagerseite 5 des Regalsystems 3 angeordneten Zulieferförderer 6 sowie ein zwischen diesen in einem Gang 7 entlang einer in strichpunktierte Linien eingetragenen Fahrbahn 8 verfahrbares Förderfahrzeug 9, insbesondere ein Regalbediengerät. Das Förderfahrzeug 9 umfasst einen lotrechten Mast 10, auf dem eine mittels einem Hubantrieb (nicht dargestellt) vertikal verstellbare Hubplattform mit einer verstellbaren Lastaufnahmevorrichtung 23, bevorzugt einem Teleskopauszug, gelagert ist. Der Ab- und Zulieferförderer 4, 6 sind beispielsweise durch einen Rollenförderer, Bandförderer und dgl. gebildet. An einem Ende des Ablieferförderers 4 ist eine quer zu dessen Förderrichtung-gemäß Pfeil 11-angeordnete, erste Fördereinrichtung 12 und an einem Ende des Zulieferförderers 6 ist eine quer zu dessen Förderrichtung - gemäß Pfeil 13 - angeordnete, zweite Fördereinrichtung 14 vorgesehen. Diese Fördereinrichtungen 12, 14 sind beispielsweise durch jeweils zwei parallel zueinander in einem Abstand verlaufende Zugmitteltriebe 15 gebildet. Die Zugmitteltriebe 15 der Fördereinrichtungen 12, 14 bilden auf Oberseiten der Zugmittel, bevorzugt Förderriemen, jeweils horizontale Transportebenen 16, 17 für ein Stückgut 20, insbesondere einem Ladehilfsmittel, wie z. B. ein Transportbehälter oder eine Palette, aus, die in Grundstellungen der Fördereinrichtungen 12, 14 in einer gemeinsamen Ebene liegen. Die Stückgüter 20 werden einerseits aus dem Regalsystem 3 über das Förderfahrzeug 9 ausgelagert oder in dieses eingelagert. Die Fördereinrichtungen 12, 14 sind in vertikaler Richtung durch Hubmittel 21, 22 verstellbar ausgebildet.

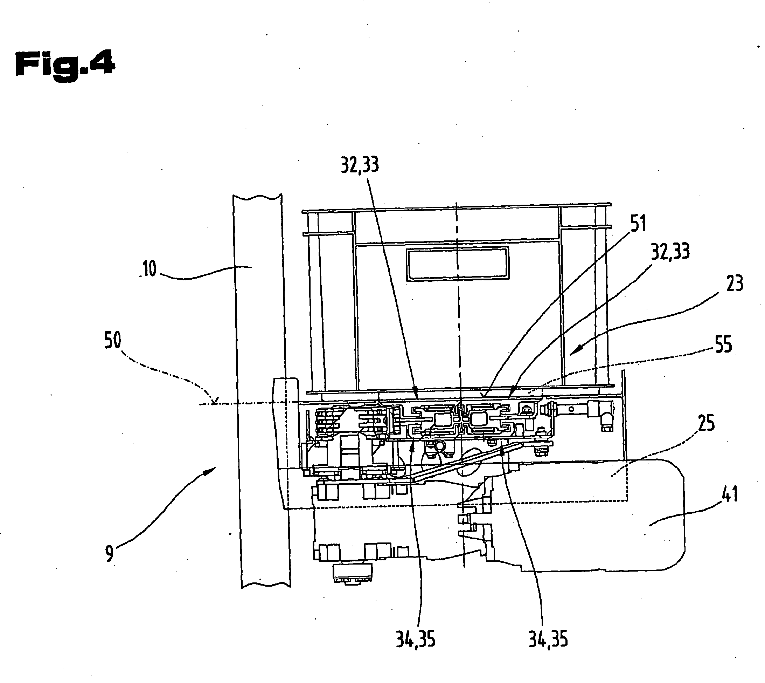

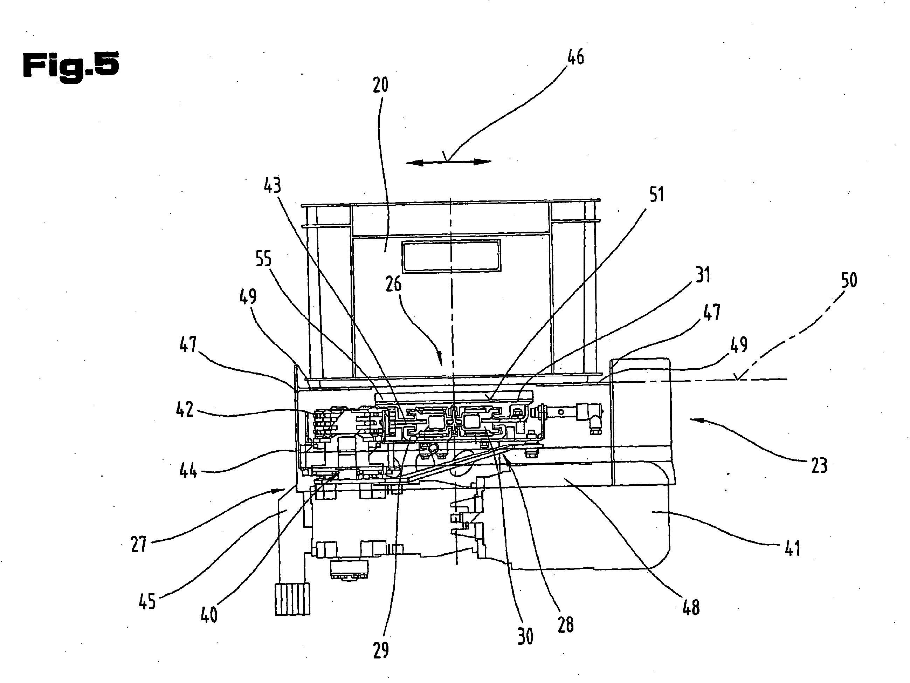

Die in den Fig. 4 und 5 dargestellte Lastäufnahmevorrichtung 23 ist auf einer in vertikaler Richtung verstellbaren und entlang dem lotrechten Mast 10 eines Förderfahrzeuges 9, insbesondere Regalbediengerät, geführten Hubplattform 25 angeordnet. Die Lastaufnahmevorrichtung 23 umfasst eine teleskopierbare Transporteinrichtung 26 sowie eine Trageinrichtung 27, die auf der Hubplattform 25 gelagert sind. Die teleskopierbare Transporteinrichtung 26 umfasst einen über einen Grundrahmen 28 mit der Hubplattform 25 befestigten Tragrahmen 29 sowie einen Mittel- und Oberschlitten 30, 31. Der Oberschlitten 31 ist über voneinander getrennt angeordnete Höhen- und Seitenführungsvorrichtungen 32, 33 und der Mittelschlitten 30 über voneinander getrennt angeordnete Höhen- und Seitenführungsvorrichtungen 34, 35 geführt und über eine Antriebsvorrichtung 40 zwischen einer auf der Hubplattform 25 befindlichen Ausgangsstellung in eine auf der Einlagerseite 5 oder Auslagerseite 2 befindlichen Übernahme- bzw. Übergabestellung verstellbar. Die Antriebsvorrichtung 40 weist einen Antriebsmotor 41 sowie einen mittels diesen angetriebenen Zugmitteltrieb 42, insbesondere Kettentrieb auf. Der Mittelschlitten 30 ist mit einem Übertragungselement 43 versehen, das mit einem Zugmittel des Zugmitteltriebes 42 bewegungsmäßig gekoppelt ist. Das Übertragungselement 43 ist nach dieser Ausführung durch eine Zahnstange gebildet, die in die Kette eingreift.

Wie in den Figuren weiters ersichtlich, umfasst die Trageinrichtung 27 ein Traggestell 44, das über einen Hubantrieb 45 (nicht näher dargestellt) auf der Hubplattform 25 gelagert ist. Das Traggestell 44 ist etwa C-förmig ausgebildet und umfasst zwei in Gassenrichtung - gemäß eingetragenem Doppelpfeil 46 - im Abstand voneinander angeordnete, aufragende Schenkel 47, eine diese verbindende Basis 48 sowie zwei aufeinander zulaufende Auflageschenkel 49. Die Auflageschenkel 49 bilden auf ihrer dem zu manipulierenden Stückgut 20 zugewandten Oberseite eine horizontale Aufnahmeebene 50 aus. Diese Aufnahmeebene 50 bildet einen Bestandteil der Lastaufnahmevorrichtung 23. Die Auflageschenkel 49 bzw. die horizontale Aufnahmeebene 50 ist bis über eine Oberseite 51 des Oberschlittens 31 in eine mit Transportebenen 16, 17 der ersten und zweiten Fördereinrichtung 12, 14 auf der Einlager- und Auslagerseite 5, 2 des Lagersystems 1 fluchtenden Ebene verstellbar. Der Hubantrieb 45 weist dabei beispielsweise einen, zwischen der Basis 48 und der Hubplattform 25 angeordneten Stellantrieb auf, der jedoch nicht weiters dargestellt ist. Dieser kann beispielsweise durch einen Elektro- oder Fluidantrieb gebildet werden.

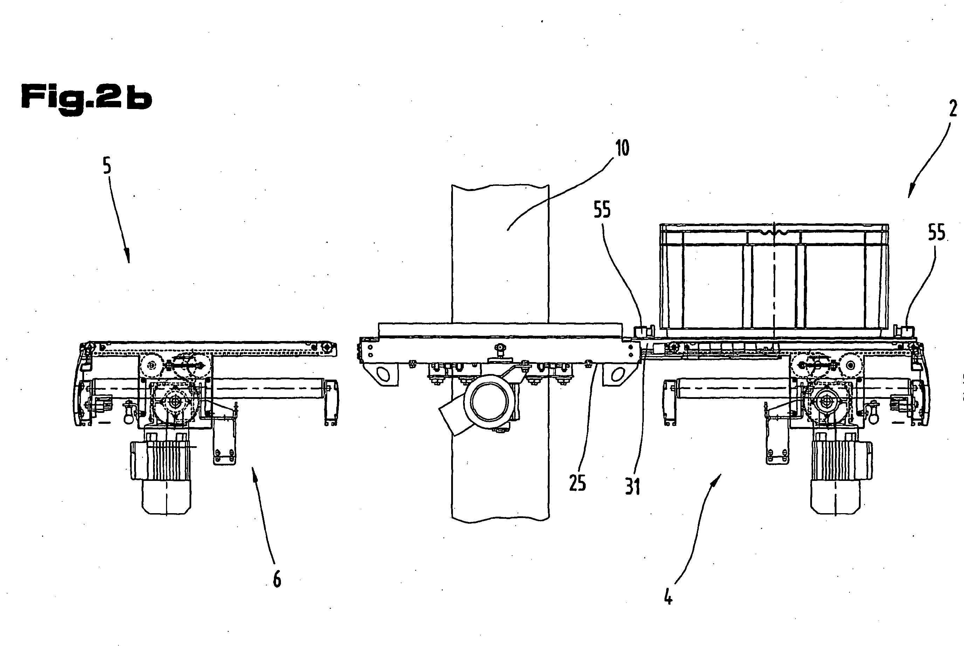

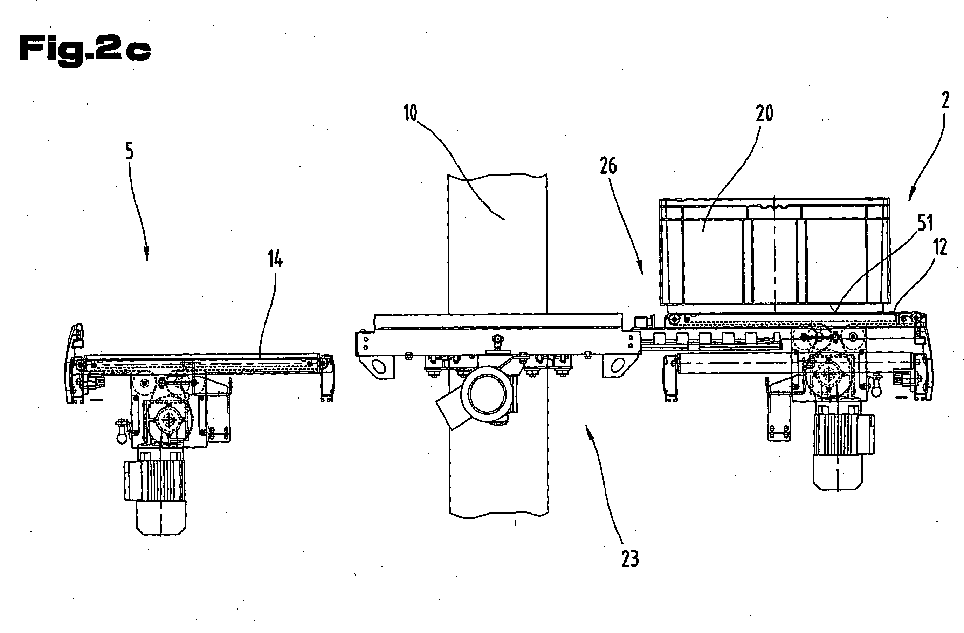

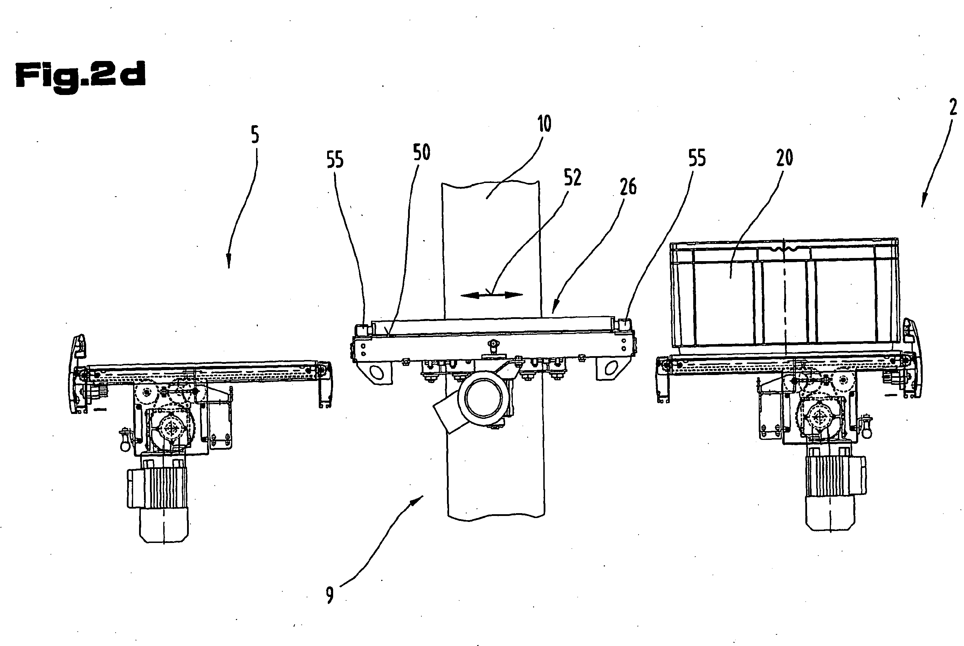

Die Auflagerschenkel 49 sind zu beiden Seiten der teleskopierbaren Transporteinrichtung 26 angeordnet und erstrecken sich parallel zur Verstellrichtung - gemäß dem in Fig. 2d eingetragenen Doppelpfeil 52 - der ausfahrbaren Transporteinrichtung 26.

Wie in den Figuren ersichtlich, ist der Oberschlitten 31 an seinen der Einlager- und Auslagerseite 5, 2 zugewandten Endbereichen mit jeweils einem Endanschlag 55 versehen.

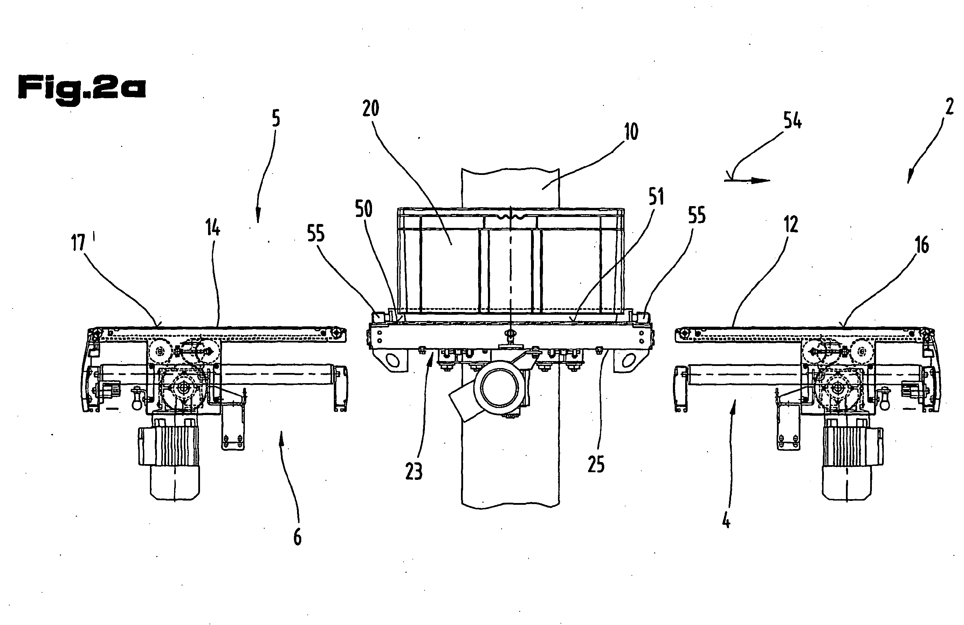

In einer ersten Ausführung gemäß den gemeinsam beschriebenen Fig. 2a bis 2d wird die Manipulation, insbesondere die Übernahme und Übergabe eines Stückgutes 20, insbesondere eines Ladehilfsmittels, wie beispielsweise Behälter, etc., zwischen der Einlagerseite 5 und der Auslagerseite 2 mittels der Lastaufnahmevorrichtung 23 in den unterschiedlichen Verfahrensschritten gezeigt. Nach dieser Ausführung erfolgt die Manipulation des Stückgutes 20 in der Vorzone des Lagersystems 1, wie in Fig. 1 dargestellt.

Wie aus Fig. 2a in Zusammenschau mit Fig. 4 ersichtlich, befindet sich das Traggestell 44 in einer abgesenkten Ruhestellung, in welcher sich die Aufnahmeebene 50 in der Feststellposition befindet und die Aufnahmeebene 50 durch die beiden Endanschläge 55 begrenzt ist und das Stückgut 20 zwischen diesen positioniert ist.

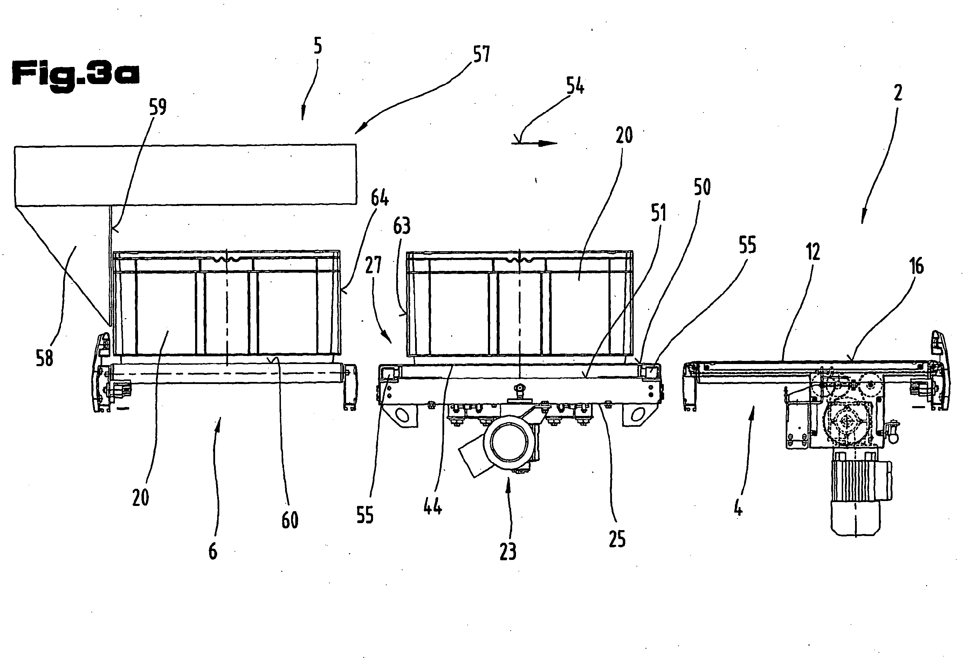

Wie aus den Fig. 1 und 3a in Zusammenschau mit Fig. 5 ersichtlich, ist das Traggestell 44 der Trageinrichtung 27 aus der Ruhestellung in die Betätigungsstellung verstellt, sodass das Stückgut 20 mit seiner Unterseite auf ein Niveau oberhalb der Endanschläge 55 angehoben wird und sich die Aufnahmeebene 50 in einer von den Endanschlägen 55 ungehinderten Transportposition für das Stückgut 20 bzw. Transportstellung befindet.

Wird nun von einem Bediener ein Stückgut 20, insbesondere Behälter, auf einem Zulieferförderer 6 abgesetzt und zur Fördereinrichtung 14 transportiert, wird dieser darauf folgend an die in Förderrichtung - gemäß Pfeil 54 - nachgeordnete und zwischen den Fördereinrichtungen 12,14 positionierte Lastaufnahmevorrichtung 23 abgegeben. Das abgegebene Stückgut 20 kann nun entweder in das Regalsystem 3 eingelagert oder an die Fördereinrichtung 12 abgegeben und von dieser dem Ablieferförderer 4 zugeführt werden. Letzterer Fall ist in den Fig. 2a bis 2d dargestellt. Dabei wird das Stückgut 20 über die Fördereinrichtung 14 auf die Lastaufnahmevorrichtung 23 aufgeschoben. Soll die Fördereinrichtung 12 mit dem Stückgut 20 beschickt werden, wird die Transporteinrichtung 26 in Förderrichtung - gemäß Pfeil 54 - ausgefahren und dabei das sich auf dem Oberschlitten 31 abstützende Stückgut 20 an die Fördereinrichtung 12 übergeben. Bevor die Transporteinrichtung 26 ausgefahren wird, wird das Traggestell 44 in seine abgesenkte Ausgangsstellung nach unten verstellt, sodass der Behälter am Oberschlitten 31 auflastet und während der Übergabe des Stückgutes 20 von der Hubplattform 25 auf die, in die in Fig. 2a dargestellte Position angehobene, Transporteinrichtung 12 die Endschläge 55 das Stückgut 20 formschlüssig hintergreifen. Ist der Behälter auf der Fördereinrichtung 12 abgesetzt worden, wird die Fördereinrichtung 12 in die in Fig. 2d dargestellte Position abgesenkt und danach die Transporteinrichtung 26 aus ihrer Übergabestellung in die Ausgangsstellung auf der Hubplattform 25 eingezogen.

In den gemeinsam beschriebenen Fig. 3a bis 3e ist eine weitere Ausführung des erfindungsgemäßen Verfahrens zum Manipulieren von zwei Stückgütern 20, insbesondere Behältern, dargestellt. Diese Ausführung unterscheidet sich zu den Fig. 2a bis 2d zusätzlich dadurch, dass anstatt der Fördereinrichtung 14 eine Verschiebevorrichtung 57 mit einem verstellbarem Abschiebeelement 58 vorgesehen ist, das den abzuschiebenden Behälter formschlüssig hintergreift und vom Zulieferförderer 6 bzw. der Einlagerseite 5 auf die Lastaufnahmevoirichtung 23 abschiebt. Das Abschiebeelement 58 ist über einen Stellantrieb, beispielsweise Elektro- oder Fluidantrieb angesteuert. Eine Abschiebefläche 59 ist vertikal auf die Aufnahmeebene 50 ausgerichtet.

In Fig. 3a befindet sich bereits ein erstes Stückgut 20 auf der Lastaufnahmevorrichtung 23. Das Traggestell 44 der Trageinrichtung 27 ist in der angehobenen Betätigungsstellung. Demgemäß ist die Aufnahmeebene 50 oberhalb der Endanschläge 55 positioniert und fluchtend zur Transportebenen 16 der Fördereinrichtungen 12 und einer Transportebene 60 des Zulieferförderers 6 positioniert.

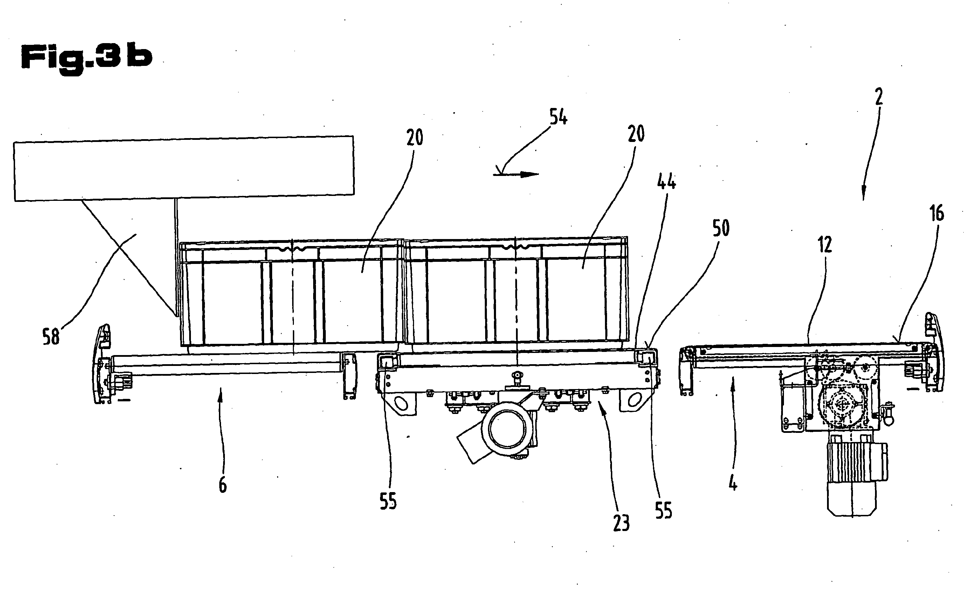

Wie in Fig. 3b ersichtlich, wird durch die Vorschubbewegung des Abschiebeelementes 58 das nächste Stückgut 20 in Förderrichtung - gemäß Pfeil 54 - bewegt.

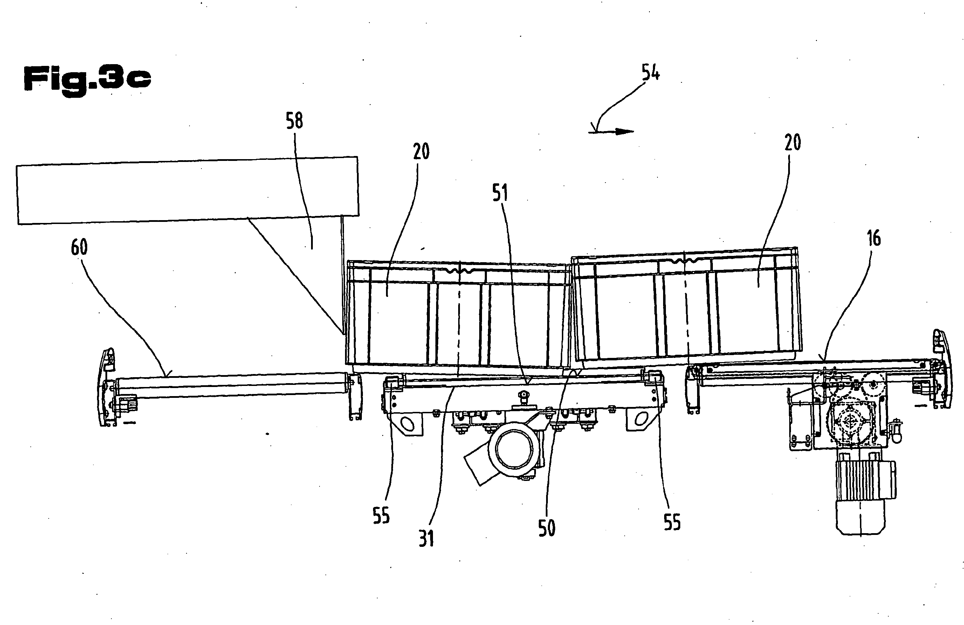

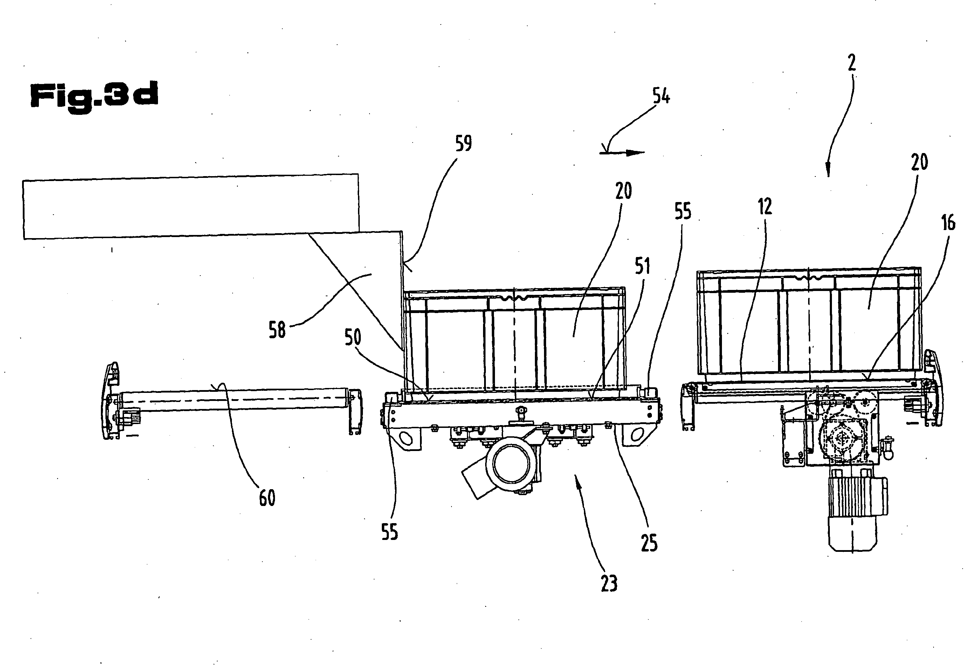

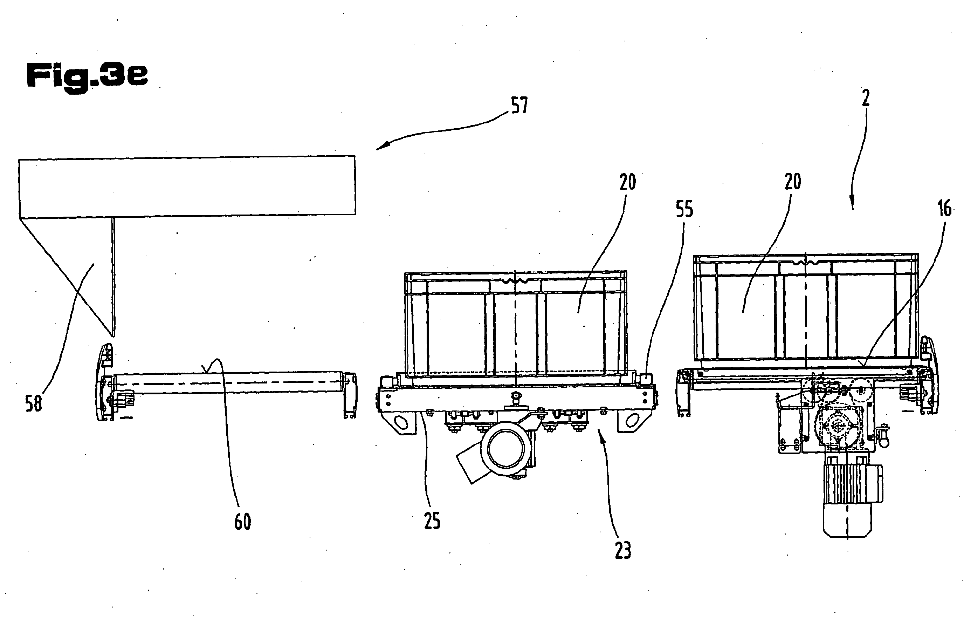

Wie aus Fig. 3c ersichtlich, wird während dem der in Förderrichtung - gemäß Pfeil 54 - vordere Behälter von der Lastaufnahmevorrichtung 23 auf die Fördereinrichtung 12 abgeschoben wird, gleichzeitig ein weiterer Behälter vom Abschiebeelement 58 in Fördereinrichtung - gemäß Pfeil 54 - auf die Lastaufnahmevorrichtung 23 aufgeschoben. Während dem der in Fördereinrichtung - gemäß Pfeil 54 - nachfolgende Behälter auf die Lastaufnahmevorrichtung 23 aufgeschoben wird, wird das Traggestell 44 aus seiner angehobenen Betätigungsstellung in eine abgesenkte Ruhestellung verstellt. Dabei wird dem Behälter das Traggestell 44 unter dem Boden weggezogen, sodass der Behälter nun auf der Oberseite 51 des Oberschlittens 31 entlanggleitet, wie in Fig. 3d dargestellt. Ist der linke Behälter vollständig auf die Lastaufnahmevorrichtung 23 aufgeschoben, befindet sich dieser zwischen den zumindest um die Länge in Förderrichtung - gemäß Pfeil 54 - voneinander im Abstand angeordneten Endanschläge 55 und ist der in Förderrichtung - gemäß Pfeil 54 - vordere Behälter auf die Fördereinrichtung 12 vollständig abgeschoben, wie dies in Fig. 3e dargestellt ist. Der auf der Lastaufnahmevorrichtung 23 befindliche Behälter kann nun beispielsweise in das in Fig. 1 dargestellte Regalsystem 3 eingelagert werden. Dabei ist von Vorteil, dass die Endanschläge 55 den Behälter in Förderrichtung - gemäß Pfeil 54 - zentrieren.

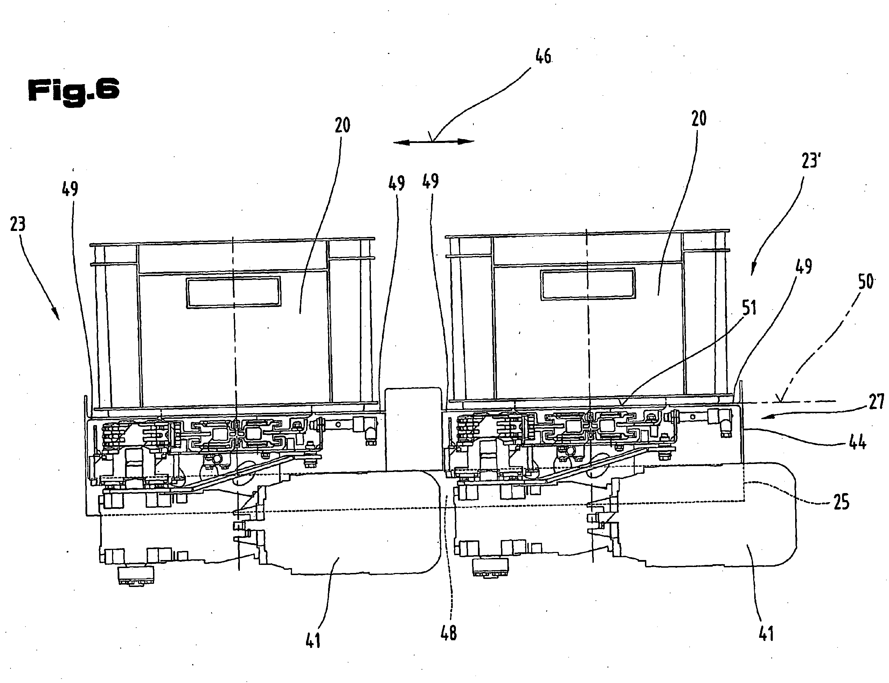

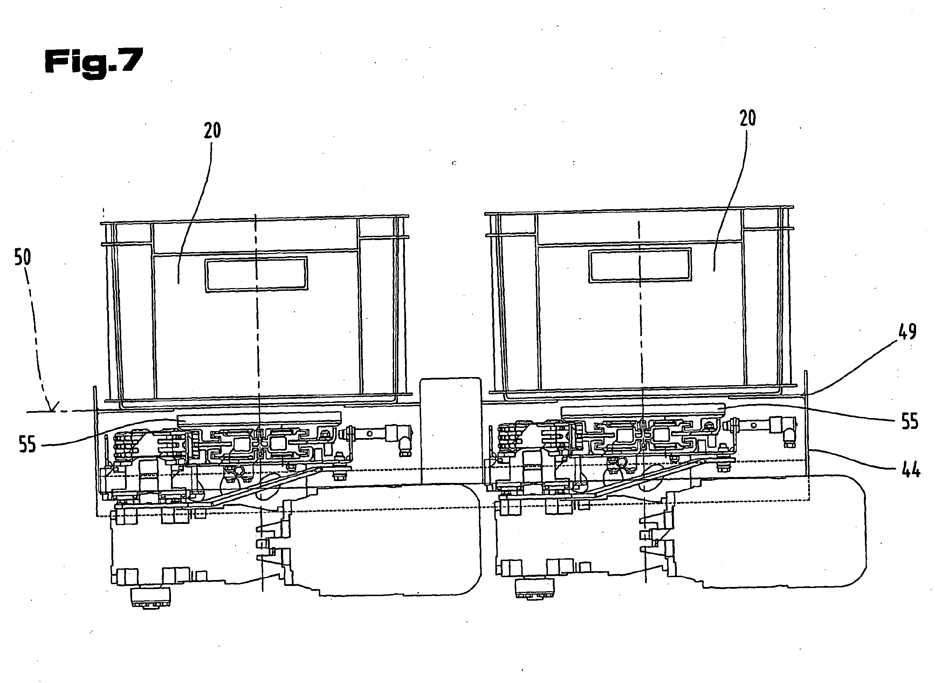

Wie in den Fig. 6 und 7 ersichtlich, besteht auch die Möglichkeit, dass auf der Hubplattform 25 in Gassenrichtung - gemäß Doppelpfeil 46 - zumindest zwei Lastaufnahmevornchtungen 23, 23' hintereinander angeordnet sind, wobei in diesem Fall beide Lastaufnahmevorrichtungen 23, 23' eine gemeinsame Trageinrichtung 27, insbesondere ein gemeinsames Traggestell 44 umfassen, sodass sowohl der linke als auch der rechte Behälter gemeinsam bzw. synchron angehoben bzw. abgesenkt werden.

In der Fig. 6 ist jedes Stückgut 20 in seiner auf dem Obertisch 31 absenkten Lage gezeigt, in der es zwischen den Endanschlägen 55 gesichert ist, während in Fig. 7 jedes Stückgut 20 in durch das Traggestell 44 bzw. den Schenkeln 49 in die angehobene Aufnahmeebene 50 verstellt gezeigt ist.

Bevorzugt wird das Traggestell 44 mit den Schenkeln 49 auch in der abgesenkten Lage eine Auflage für das Stückgut 20 bilden, d.h. dass die Stützflächen für das Stückgut 20 der Schenkel 49 etwa niveaugleich oder gering höher als die Oberseite 51 des Oberschlittens 31 verlaufen wird, wodurch eine stabile Lage des Stückguts 20 am Oberschlitten 31 während des Fahrbetriebes des Förderfahrzeuges 9 erreicht wird.

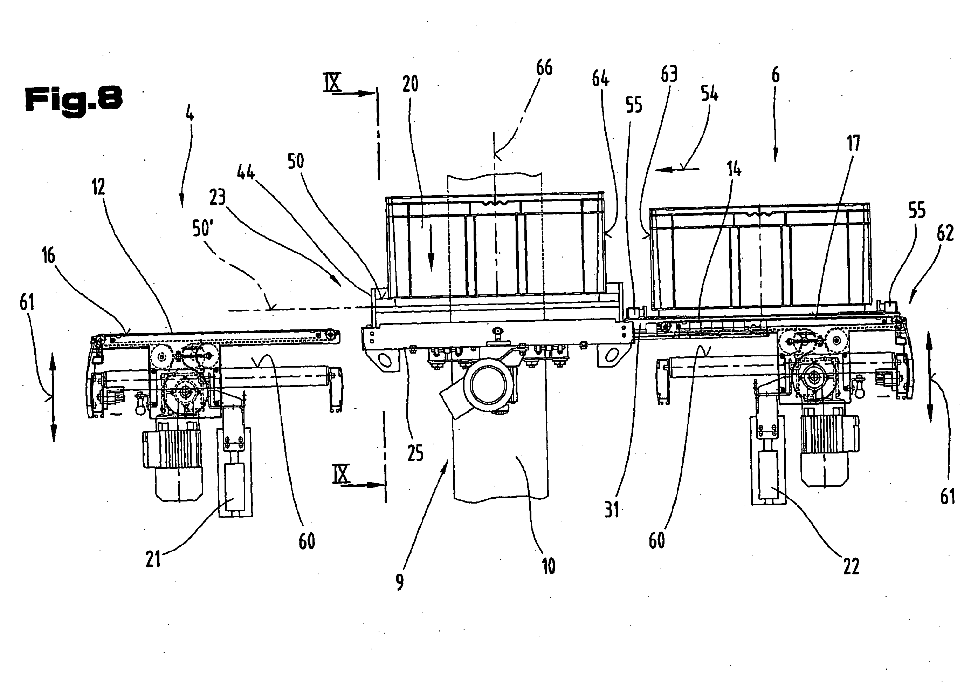

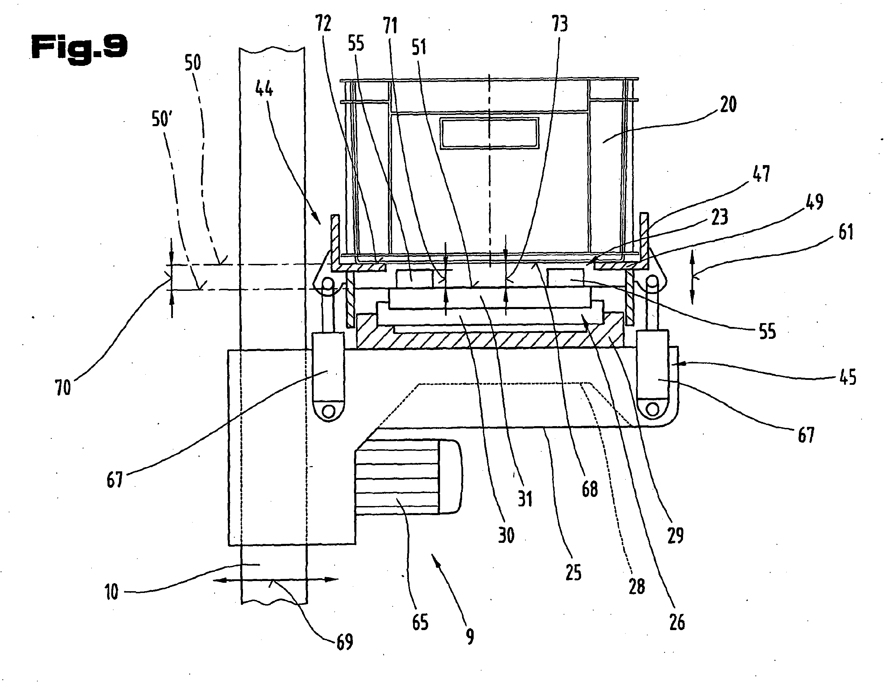

In den Fig. 8 und 9 ist nun eine weitere, bevorzugte Ausführung der Vorrichtung zur Manipulation des Stückguts 20, insbesondere Transportbehälters, für den Transfer des Stückguts 20 zwischen der Lastaufnahmevorrichtung 23 und den Fördereinrichtungen 12, 14 des Ablieferförderers 4 bzw. Zulieferförderers 6 gezeigt. Wie bereits vorhergehend ausgeführt, sind die Fördereinrichtungen 12, 14, die durch zumindest jeweils zwei parallel zueinander verlaufende Zugmitteltriebe 15 (Fig. 1) gebildet werden, in vertikaler Richtung - gemäß Doppelpfeil 61-mit den Hubmitteln 21, 22 verstellbar. Damit ist es möglich, die Transportebenen 16, 17 der Fördereinrichtungen 12, 14 gegenüber der Transportebene 60 des Ablieferförderers 4 und Zulieferförderers 6 zu verstellen und ermöglicht dies den Transportbehälter 20 vom Ablieferförderer 4 bzw. Zulieferförderer 6 mittels der teleskopierbaren Transporteinrichtung 26 des Förderfahrzeuges 9 bzw. mittels des mit den Endanschlägen 55 versehenen Oberschlittens 31 zu übernehmen.

Im gezeigten Ausführungsbeispiel befindet sich auf der Lastaufnahmevorrichtung 23 das Stückgut 20 in durch das Traggestell 44 angehobener Position, wodurch eine Ausfahrbewegung des Oberschlittens 31 mit den Endanschlägen 55 unter dem Stückgut 20 ermöglicht wird.

Die Situation zeigt nun eine Übernahme des durch den Zulieferförderer 6 bereitgestellten Stückguts 20 auf die Lastaufnahmevorrichtung 23 bei gleichzeitiger Abgabe des auf dem Traggestell 44 der Lastaufnahmevorrichtung 23 angehoben positionierten Stückguts 20 auf den Ablieferförderer 4 während des Einfahrens der teleskopierbaren Transporteinrichtung 26.

Zur Erzielung kürzester Spielzeiten wird bevorzugt dieser Übemahme-/Übergabevorgang mittels der teleskopierbaren Transporteinrichtung 26, die sehr hohe Verfahrgeschwindigkeiten erreicht, vorgenommen.

Dazu wird die Fördereinrichtung 14 des Zulieferförderers 6 ausgehend von der Transportebene 60 auf ein Niveau angehoben, das ein Unterfahren des Stückguts 20 mit dem Oberschlitten 31 einschließlich der diesen überragenden Endanschlägen 55 ermöglicht. Das Ausfahren des Oberschlittens 31 mit den Endanschlägen 55 ist durch den angehobenen Zustand des Stückguts 20 auf der Lastaufnahmevorrichtung 23 uneingeschränkt möglich. Sobald der Oberschlitten 31 seine Endstellung erreicht hat, in der das Stückgut 20 zwischen den Endanschlägen 55 positioniert ist, erfolgt ein Absenken der Fördereinrichtung 14, wodurch das Stückgut 20 auf der Oberseite 51 des Oberschlitten 31, zwischen den Endanschlägen 55 aufgelagert wird und damit in gesicherter Position abgestellt ist.

Es erfolgt nunmehr das Einfahren des Oberschlittens 31 mit dem vom Zulieferförderer 6 aufgenommene Stückgut 20 auf die Lastaufnahmevorrichtung 23 des Förderfahrzeuges 9. Dabei erfolgt gleichzeitig, sobald gegenüberliegende Anlageflächen 63, 64 der Stückgüter 20 zur Anlage gelangen, der Abschiebvorgang des auf der Lastaufnahmevorrichtung 23 in angehobener Position auf dem Traggestell 44 ruhenden Stückguts 20 in Richtung der etwa auf das Niveau der Oberseite 51 des Oberschlitten 31 mit der Transportebene 16 angehobene Fördereinrichtung 12 des Ablieferförderers 4. Zur Erzielung einer vollständigen Übergabe auf die Fördereinrichtung 12 erfolgt ein Überfahren einer Mittellage 66 auf der Lastaufnahmevorrichtung 23 durch den Oberschlitten 31, um ein durch Sicherheitsabstände vorrichtungsbedingtes Übermaß zu berücksichtigen und das abzugebende Stückgut 20 mittig auf der Fördereinrichtung 12, bzw. dem Ablieferförderer 4 zu positionieren. Nach Erreichung dieser Endposition erfolgt eine Rückfahrbewegung des Oberschlittens 31 in die Mittellage 66 auf der Lastaufnahmevorrichtung 23. Zu erwähnen ist, dass das Traggestell 44 mit dem auf diesem aufgelagerten Stückgut 20 während des Abschiebevorgangs und mit diesem nahezu synchron in die untere Ruhestellung bzw. Endposition abgesenkt werden kann, wodurch Hubbewegungen bzw. Verstellwege für die Fördereinrichtung 12 reduziert werden da diese nur auf das Niveau der Oberseite 51 des Oberschlittens 31 anzuheben ist.

Weiters sei noch darauf verwiesen, dass während des Vorganges der Übernahme und Abgabe ein gleichzeitiger Betrieb der Fördereinrichtungen 12, 14 bzw. der Zugmitteltriebe 15 zur Unterstützung des Vorganges erfolgen kann.

Aber es wird auch noch darauf verwiesen, dass die in Fig. 8 gezeigte Ausbildung mit den Fördereinrichtungen 12, 14 eine bevorzugte Möglichkeit der Übernahme und Übergabe des Stückgutes 20 vom Zulieferförderer 6, Ablieferförderer 4 von bzw. auf die Lastaufnahmevorrichtung 23 darstellt. Selbstverständlich ist eine Ausbildung möglich, wonach in den Übergabe- und Abgabebereichen, anstelle der höhenverstellbaren Fördereinrichtungen 12, 14 einfache Hubgestelle bzw. die Anwendung eines weiteren Traggestells 44, wie am Lastaufnahmemittel 62 vorhanden, vorzusehen, womit der beschriebene Manipulationsvorgang mit der teleskopierbaren Transporteinrichtung 26 ebenso ermöglicht wird und damit angetriebene Fördereinrichtungen eingespart werden.

In der Fig. 9 ist im Detail die auf der Hubplattform 25 angeordnete Lastaufnahmevorrichtung 23, insbesondere die teleskopierbare Transporteinrichtung 26, gezeigt. Die Hubplattform 25 ist in Führungsanordnungen des Mastes 10 in vertikaler Richtung verstellbar gelagert und weist die Antriebsvorrichtung mit einem Antriebsmotor 65 für die Vertikalverstellung auf. Die teleskopierbare Transporteinrichtung 26 ist auf dem Tragrahmen 29 befestigt, der auf der bevorzugt als Grundrahmen 28 ausgebildeten Hubplattform 25 angeordnet ist. Der Tragrahmen 29 lagert linear verstellbar den Mittelschlitten 30, in dem der Oberschlitten 31 verstellbar gelagert ist. Auf die detaillierte Darstellung von Führungsanordnungen und Antriebsanordnungen für die teleskopierbare Transporteinrichtung 26, wozu es verschiedene aus dem technischen Stand bekannte Lösungen gibt, wurde in Fig. 9 verzichtet.

Die erfindungsgemäße Ausbildung sieht weiters die am Oberschlitten 31 einstellbar befestigten Endanschläge 55 vor, die die Oberseite 51 des Oberschlittens 31 überragen und in den entgegengesetzten Endbereichen in einem Abstand voneinander angeordnet sind, der es ermöglicht, auf der Oberseite 51 des Oberschlittens 31 das zu transportierende Stückgut 20 zwischen den Endanschlägen 55 aufzulagern. Damit ist das Stückgut 20 auf dem Oberschlitten 31 in Verstellrichtung der teleskopierbaren Transporteinrichtung 26 gesichert positioniert, wodurch eine hohe Beschleunigung dieser, für den Transport des Stückgutes 20, möglich ist.

Erfindungsgemäß ist die Lastaufnahmevorrichtung 23 mit dem Traggestell 44 versehen, welches beispielsweise durch die beidseits des Obertisches 31 in Richtung dessen Längserstreckung verlaufende, aus dem Schenkel 47 und dem Auflageschenkel 49 gebildeten Tragprofilen besteht und mittels zumindest einem Hubantrieb 45, z.B. mit einem Fluid beaufschlagbares Stellelement 67 in zur Oberseite 51 des Oberschlittens 31 vertikaler Richtung - gemäß Doppelpfeil 61- verstellbar sind. Die aufeinander zugerichteten Auflageschenkel 49 untergreifen beidseits das Stückgut 20 und bilden somit die Aufnahmeebene 50, auf der das Stückgut 20 mit einer Unterseite 68 abgestellt ist.

Diese Aufnahmeebene 50 ist durch die Verstellbarkeit des Traggestells 44 zwischen einer Feststellposition, in der die Aufnahmeebene 50' durch die gegenüberliegenden Endanschläge 55 begrenzt ist, d.h. dass das Stückgut 20 mit einer Unterseite 68 in etwa auf das Niveau der Oberseite 51 des Oberschlittens 31 abgesenkt ist, und einer angehobenen Transportposition bzw. Transportstellung, in der sich die Aufnahmeebene 50 oberhalb der Endanschläge 55 befindet, variierbar. Damit ist - wie dies der Fig. 9 zu entnehmen - die Verstellbarkeit der teleskopierbaren Transporteinrichtung 26 auf der Lastaufnahmevorrichtung 23 auch dann gewährleistet, wenn bereits ein Stückgut 20 auf der Lastaufnahmevorrichtung 23 abgestellt ist.

Dies ermöglicht die bereits in Fig. 8 beschriebene, die Umschlagzeit minimierende, Stückgutmanipulation zwischen der Lastaufnahmevorrichtung 23 und dem Ablieferförderer 4 bzw. dem Zulieferförderer 6 und erhöht damit die Wirtschaftlichkeit des erfindungsgemäßen Lagersystems.

Die Ausbildung des Traggestells 44 mit gegenüberliegenden und in Verstellrichtung der teleskopierbaren Transporteinrichtung 26 verlaufenden L-förmigen Profilen gewährleistet weiter eine Absicherung des Stückgutes 20 mittels der aufragenden Schenkel 47 in einer Verfahrrichtung - gemäß Doppelpfeil 46 - des Förderfahrzeuges 9, wodurch auch bei dieser Bewegung hohe Beschleunigungen möglich sind, ohne dass das Stückgut 20 von der Lastaufnahmevorrichtung 23 abstürzt.

Der Fig. 9 ist weiters zu entnehmen, dass eine Hubhöhe 70 des Traggestells 44 auf eine Höhe 71, mit der die Endanschläge 55 die Oberseite 51 des Oberschlittens 31 überragen, in etwa dieser Höhe 71 entspricht. Es ist vorgesehen, dass Stützflächen 72 der Auflageschenkel 49 in einer abgesenkten Position bzw. Ruhestellung des Traggestells 44, die der Feststellposition entspricht, etwa fluchtend mit einer durch die Oberseite 51 gebildeten Ebene entsprechen, die die abgesenkte Transportebene 50' darstellt und damit das Stückgut 20 zwischen den Endanschlägen 55 positioniert ist. In einer um die Hubhöhe 70 angehobenen Position sind die Stützflächen 72 der Auflageschenkel 49 und damit die Aufnahmeebene 50 in der Transportposition in einer zur Aufnahmeebene 50 senkrecht gemessenen Distanz 73 zu der Oberseite 51 des Oberschlittens 31, die größer ist als die Höhe 71 der Endanschläge 55.

Die Ausführungsbeispiele zeigen mögliche Ausführungsvarianten des Verfahrens oder der Vorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Vorrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufsteliung

- 1: Lagersystem
- 2: Auslagerseite
- 3: Regalsystem
- 4: Ablieferförderer
- 5: Einlagerseite

- 6: Zulieferförderer
- 7: Gang
- 8: Fahrbahn
- 9: Förderfahrzeug
- 10: Mast

- 11: Pfeil
- 12: Fördereinrichtung
- 13: Pfeil
- 14: Fördereinrichtung
- 15: Zugmitteltrieb

- 16: Transportebene
- 17: Transportebene
- 18:
- 19:
- 20: Stückgut

- 21: Hubmittel
- 22: Hubmittel
- 23: Lastaufnahmevorrichtung
- 24:
- 25: Hubplattform

- 26: Transporteinrichtung
- 27: Trageinrichtung
- 28: Grundrahmen
- 29: Tragrahmen
- 30: Mittelschlitten

- 31: Oberschlitten
- 32: Höhenführungsvorrichtung
- 33: Seitenführungsvorrichtung
- 34: Höhenführungsvorrichtung
- 35: Seitenführungsvorrichtung

- 40: Antriebsvorrichtung
- 41: Antriebsmotor
- 42: Zugmitteltrieb
- 43: Übertragungselement
- 44: Traggestell
- 45: Hubantrieb

- 46: Doppelpfeil
- 47: Schenkel
- 48: Basis
- 49: Auflageschenkel
- 50: Aufnahmeebene
- 50': Transportebene

- 51: Oberseite
- 52: Doppelpfeil
- 53:
- 54: Pfeil
- 55: Endanschlag

- 56:
- 57: Verschiebevorrichtung
- 58: Abschiebeelement
- 59: Abschiebefläche
- 60: Transportebene

- 61: Doppelpfeil
- 62: Lastaufnahmemittel
- 63: Anlagefläche
- 64: Anlagefläche
- 65: Antriebsmotor

- 66: Mittellage
- 67: Stellelement
- 68: Unterseite
- 69:
- 70: Hubhöhe

- 71: Höhe
- 72: Stützfläche
- 73: Distanz

## Patentansprüche

1. Verfahren zum Manipulieren zumindest eines Ladehilfsmittels (20), insbesondere eines Behälters, zwischen einer Einlagerseite (5) und einer Auslagerseite (2) mittels einer auf einer höhenverstellbaren Hubplattform (25) gelagerten Lastaufnahmevorrichtung (23) mit einer Transporteinrichtung (26), bevorzugt in einer Vorzone eines Lagersystems (1), bei dem die Transporteinrichtung (26) zum Manipulieren des an ihr auflastenden Stückguts (20) in der horizontalen Ebene zwischen der Ausgangsstellung auf der Hubplattform (25) und der Übernahme- bzw. Übergabestellung auf der Auslager- oder Einlagerseite (2, 5) verstellt wird und das Stückgut (20) zwischen zwei der Auslager- oder Einlagerseite (2, 5) zugewandten Endbereichen der Transporteinrichtung (26) angeordneten Endanschlägen (55) positioniert wird, **dadurch gekennzeichnet, dass** beim Manipulieren des Stückguts (20) vor der Übernahme des Ladehilfsmittels (20) von einer Fördereinrichtung (4, 6; 12, 14) an der Auslager- oder Einlagerseite (2, 5) auf die Hubplattform (25) eine Aufnahmeebene (50) eines an der Hubplattform (25) gelagerten heb- und senkbaren Traggestelles (44) in eine Transportposition verstellt wird, in welcher sich die Aufnahmeebene (50) oberhalb der Endanschläge (55) befindet, und vor der Übergabe des Ladehilfsmittels (20) von der Hubplattform (25) an eine Fördereinrichtung (4, 6; 12, 14) an der Auslager- oder Einlagerseite (2, 5) die Aufnahmeebene (50) des heb- und senkbaren Traggestelles (44) in eine Feststellposition annähernd niveaugleich zur, gegebenenfalls unterhalb der von der Transporteinrichtung (26) an der Oberseite (51) ausgebildeten Ebene verstellt wird, in welcher das Ladehilfsmittel (20) sich zwischen den die Aufnahmeebene (50) begrenzenden Endanschlägen (55) befindet und durch die Transporteinrichtung (26) zwischen der Hubplattform (25) und der Fördereinrichtung (4, 6; 12, 14) relativ zum Traggestell (44) bewegt wird.

2. Verfahren nach Anspruch 1, **dadurch gekennzeichnet, dass** die Lastaufnahmevorrichtung (23) zwischen einer dieser in Förderrichtung des Ladehilfsmittels (20) vorgeordneten, das Ladehilfsmittel (20) abliefernden Fördereinrichtung (4; 12) und nachgeordneten, das Ladehilfsmittel (20) zuliefernden Fördereinrichtung (6; 14) positioniert und die Aufnahmeebene (50) in eine mit Transportebenen (60) der Fördereinrichtungen (4, 6; 12, 14) fluchtende Lage verbracht wird, worauf zumindest ein Ladehilfsmittel (20) von der abliefernden Fördereinrichtung (4; 12) in Förderrichtung auf die Aufnahmeebene (50) gefördert und dabei die Aufnahmeebene (50) aus der Transportposition in Richtung auf die Feststellposition verstellt wird, wobei in der Transportposition die Aufnahmeebene (50) des Traggestelles (44) und die Transportebene (60; 16, 17) einer Fördereinrichtung (4, 6; 12, 14) an der Auslager- oder Einlagerseite (2, 5) fluchtend verlaufen.

3. Verfahren nach Anspruch 1 oder 2, **dadurch gekennzeichnet, dass** vorerst die Aufnahmeebene (50) mit einem darauf befindlichen, positionierten ersten Ladehilfsmittel (20) in die Transportposition fluchtend oder unterhalb zur Transportebene (16) einer Fördereinrichtung (6) an der Einlagerseite (5) verbracht wird, worauf ein zweites Ladehilfsmittel (20) von der Einlagerseite (5) in Richtung der Aufnahmeebene (50) verschoben wird, bis das zweite Ladehilfsmittel (20) mit einer Anlagefläche (63) gegen eine Anlagefläche (63) des ersten Ladehilfsmittels (20) anstoßt, worauf das erste Ladehilfsmittel (20) auf der Aufnahmeebene (50) durch das zweite Ladehilfsmittel (20) von der Einlagerseite (5) soweit an die Auslagerseite (2) bewegt wird, dass sich ein Teil des von der Aufnahmeebene (50) abgeschobenen ersten Ladehilfsmittels (20) auf der Transportebene (16) in der Auslagerseite (2) befindet, worauf die Aufnahmeebene (50) in die Feststellposition abgesenkt und das zweite Ladehilfsmittel (20) zwischen den Endanschlägen (55) oder gegen den von der Einlagerseite (5) abgewendeten Endanschlag (55) positioniert und in dieser vom zweiten Ladehilfsmittel (20) eingenommenen Position die Vorwärtsbewegung des zweiten Ladehilfsmittels (20) beendet wird.

4. Verfahren nach Anspruch 3, **dadurch gekennzeichnet, dass** nach dem Überschieben des ersten Ladehilfsmittels (20) auf die Auslagerseite (2), dieses in Richtung der Auslagerseite (2) von der Anlagefläche (64) des zweiten Ladehilfsmittels (20) distanziert wird.

5. Vorrichtung zum Manipulieren zumindest eines Ladehilfsmittels (20), insbesondere eines Behälters, zwischen einer Einlagerseite (5) und einer Auslagerseite (2) mittels einer Lastaufnahmevorrichtung (23), bevorzugt in einer Vorzone eines Lagersystems (1), insbesondere zur Durchführung des Verfahrens nach einem der Ansprüche 1 bis 4, welche Lastaufnahmevorrichtung (23) auf einer höhenverstellbaren Hubplattform (25) montiert ist und eine Transporteinrichtung (26) zum Manipulieren des an ihr auflastende Stückguts (20) in der horizontalen Ebene zwischen der Ausgangsstellung auf der Hubplattform (25) und der Übernahme- bzw. Übergabestellung auf der Auslager- oder Einlagerseite (2, 5) aufweist, wobei die Transporteinrichtung (26) in den der Auslager- und Einlagerseite (2, 5) zugewandten Endbereichen jeweils einen Endanschlag (55) aufweist, zwischen denen ein Ladehilfsmittel (20) positionierbar ist, **dadurch gekennzeichnet, dass** die Lastaufnahmevorrichtung (23) zum Manipulieren des Ladehilfsmittels (20) zwischen der Hubplattform (25) und einer Fördereinrichtung (4, 6; 12, 14) zusätzlich ein an der Hubplattform (25) gelagertes, heb- und senkbares Traggestell (44) umfasst, das eine durch einen Hubantrieb (45) zwischen einer Transportposition und einer annähernd niveaugleich zur, gegebenenfalls unterhalb der von der Transporteinrichtung (26) an der Oberseite (51) ausgebildeten Ebene liegende Feststellposition verstellbare Aufnahmeebene (50) ausbildet, wobei in der Transportposition sich die Aufnahmeebene (50) oberhalb der Endanschläge (55) befindet und in der Feststellposition das Ladehilfsmittel (20) sich zwischen den die Aufnahmeebene (50) begrenzenden Endanschlägen (55) befindet und durch die Transporteinrichtung (26) zwischen der Hubplattform (25) und der Fördereinrichtung (4, 6; 12, 14) relativ zum Traggestell (44) bewegbar ist.

6. Vorrichtung nach Anspruch 5, **dadurch gekennzeichnet, dass** die Einlagerseite (5) und/oder Auslagerseite (2) durch beidseits der Aufnahmeebene (50) angeordnete Fördereinrichtungen (12, 14) gebildet ist und in einer senkrechten Querebene zur Förderrichtung der Förderereinrichtungen (12, 14) der Höhe nach gegenüber diesen verstellbare Transportebenen (16, 17) ausbilden.

7. Vorrichtung nach Anspruch 6, **dadurch gekennzeichnet, dass** die Fördereinrichtungen (12, 14) über Hubmittel (21, 22) in zu den Transportebenen (16,17) senkrechter Richtung verstellbar sind.

8. Vorrichtung nach Anspruch 7, **dadurch gekennzeichnet, dass** eine Hubhöhe der Fördereinrichtungen (12, 14) größer ist als eine Bauhöhe eines Oberschlittens (31) der Transporteinrichtung (26) zuzüglich einer Höhe (71) der die Oberseite (51) des Oberschlittens (31) überragenden Endanschläge (55).

9. Vorrichtung nach Anspruch 5 oder 6, **dadurch gekennzeichnet, dass** das Traggestell (44) durch zu beiden Seiten des Oberschlittens (31) und in Längsrichtung der Transporteinrichtung (26) durchgehend erstreckende Tragprofile, bevorzugt L-Profile, gebildet ist, die zwei aufeinander zulaufende Auflageschenkeln (49) aufweisen, wobei die Aufnahmeebene (50) durch in einer zur Oberseite (51) des Oberschlittens (31) der Transporteinrichtung (26) parallelen Ebene verlaufende Stützflächen (72) der Auflageschenkeln (49) gebildet sind.

10. Vorrichtung nach Anspruch 9, **dadurch gekennzeichnet, dass** das Traggestell (44) mit dem Hubantrieb (45) in zur Oberseite (51) des Oberschlittens (31) senkrechter Richtung verstellbar an einem Tragrahmen (29) der Lastaufuahmevorrichtung (23) angeordnet ist.

11. Vorrichtung nach Anspruch 5, **dadurch gekennzeichnet, dass** der Hubantrieb (45) des Traggestells (44) durch mit einem Fluid beaufschlagte Stellelemente (67) gebildet ist.

12. Vorrichtung nach Anspruch 5, **dadurch gekennzeichnet, dass** der Hubantrieb (45) für das Traggestell (44) durch elektromotorisch betriebene Stellelemente (67) gebildet ist.

13. Vorrichtung nach Anspruch 5 oder 6, **dadurch gekennzeichnet, dass** an der das Ladehilfsmittel (20) abliefernden Fördereinrichtung (4) und/oder der das Ladehilfsmittel (20) zuliefernden Fördereinrichtung (6) im Stückgut- Manipulationsbereich, insbesondere der Vorzone des Lagersystems (1), ein weiteres Traggestell (44) mit dem Hubantrieb (45) angeordnet ist bzw. sind.

14. Vorrichtung nach Anspruch 13, **dadurch gekennzeichnet, dass** das weitere Traggestell (44) der das Ladehilfsmittel (20) abliefernden Fördereinrichtung (4) und/oder das Ladehilfsmittel (20) zuliefernden Fördereinrichtung (6) in zur Transportebene (60) der Fördereinrichtung (4; 6) senkrechter Richtung verstellbar ist.

15. Vorrichtung nach einem der Ansprüche 5 bis 14, **dadurch gekennzeichnet, dass** die Hubplattform (25) auf einem Förderfahrzeug (9), bevorzugt einem Regalbediengerät, in einer Führungsvorrichtung mit einer Antriebsvorrichtung in zur Aufnahmeebene (50) senkrechter Richtung verstellbar ist.

16. Vorrichtung nach einem der Ansprüche 5 bis 15, **dadurch gekennzeichnet, dass** die Transporteinrichtung (26) der Lastaufnahmevorrichtung (23) durch einen Teleskoptisch gebildet ist.

17. Vorrichtung nach einem der Ansprüche 5 bis 16, **dadurch gekennzeichnet, dass** die Endanschläge (55) in dem der Einlagerseite (5) und/oder Auslagerseite (2) zugewandten Endbereichen des Oberschlittens (31) der Transporteinrichtung (26) einstellbar, aber feststehend angeordnet sind.

18. Vorrichtung nach einem der Ansprüche 5 bis 17, **dadurch gekennzeichnet, dass** eine Hubhöhe des Hubantriebs (45) bzw. der Hubvorrichtung für die Aufnahmeebene (50) zumindest einem Teil der Höhe der Endanschläge (55) entspricht.

## Claims

1. Method of manipulating at least one loading aid (20), in particular a container, between a storage (5) end and a despatch end (2) by means of a load bearing device (23) mounted on a height-adjustable lift platform (25), with a transport unit (26), preferably in an upstream zone of a storage system (1), whereby the transport unit (26) for manipulating the object (20) loaded on it is displaced in the horizontal plane between the initial position on the lift platform (25) and the transfer or handover position at the despatch or storage end (2, 5), and the object (20) is positioned between two end stops (55) disposed in end regions of the transport unit (26) facing the despatch or storage end (2, 5), **characterised in that**, in order to manipulate the object (20), prior to transferring the loading aid (20) from a conveyor system (4, 6; 12, 14) at the despatch or storage end (2, 5) onto the lift platform (25), a receiving plane (50) of a support frame (44) which is mounted so that it can be raised and lowered on the lift platform (25) is moved into a transport position in which the receiving plane (50) is disposed above the end stops (55), and prior to transferring the loading aid (20) from the lift platform (25) onto a conveyor system (4, 6; 12, 14) at the despatch or storage end (2, 5), the receiving plane (50) of the raisable and lowerable support frame (44) is moved into a fixed position approximately on the same level as, optionally below, the plane formed by the transport unit (26) at the top face (51), in which the loading aid (20) is disposed between the end stops (55) delimiting the receiving plane (50) and moved by the transport unit (26) between the lift platform (25) and the conveyor system (4, 6; 12, 14) relative to the platform (44).

2. Method as claimed in claim 1, **characterised in that** the load bearing device (23) is positioned between a conveyor system (4; 12) despatching the loading aid (20) disposed upstream of it in the conveying direction of the loading aid (20) and a downstream conveyor system (6; 14) delivering it, and the receiving plane (50) is moved into a position aligned with transport planes (60) of the conveyor systems (4, 6; 12, 14), after which at least one loading aid (20) is conveyed by the despatching conveyor system (4; 12) in the conveying direction towards the receiving plane (50) and the receiving plane (50) is thus moved out of the transport position in the direction towards the fixed position, and the receiving plane (50) of the support frame (44) at the despatching or storage end (2, 5) extends flush with the transport plane (60; 16, 17) of a conveyor system (4, 6; 12, 14) in the transport position.

3. Method as claimed in claim 1 or 2, **characterised in that** the receiving plane (50) with a first loading aid (20) positioned on it is firstly moved into alignment with or below the transport plane (16) of a conveyor system (6) at the storage end (5), after which a second loading aid (20) is pushed from the storage end (5) in the direction of the receiving plane (50) until the second storage aid (20) makes contact with a contact surface (63) of the first loading aid (20) by means of a contact surface (63), whereupon the first loading aid (20) is moved on the receiving plane (50) by means of the second loading aid (20) from the storage end (5) towards the despatch end (2) until a part of the first loading aid (20) pushed down from the receiving plane (50) is disposed on the transport plane (16) at the despatch end (2), after which the receiving plane (50) is lowered into the fixed position and the second loading aid (20) is positioned between the end stops (55) or against the end stop (55) facing away from the storage end (5), and when this position has been assumed by the second loading aid (20), the forward movement of the second loading aid (20) is terminated.

4. Method as claimed in claim 3, **characterised in that**, after the first loading aid (20) has been pushed across towards the despatch end (2), it is positioned at a distance apart from the contact surface (64) of the second loading aid (20) in the direction of the despatch end (2).

5. Device for manipulating at least one storage aid (20), in particular a container, between a storage end (5) and a despatch end (2) by means of a load bearing device (23), preferably in an upstream zone of a storage system (1), in particular for implementing the method as claimed in one of claims 1 to 4, which load bearing device (23) is mounted on a height-adjustable lift platform (25) and has a transport unit (26) for manipulating the object (20) loaded on it in the horizontal plane between the initial position on the lift platform (25) and the transfer or handover position at the despatch or storage end (2, 5), and the transport unit (26) has a respective end stop (55) in the end regions facing the despatch and storage end (2, 5) between which a loading aid (20) can be positioned, **characterised in that** the load bearing device (23) for manipulating the loading aid (20) between the lift platform (25) and a conveyor system (4, 6; 12, 14) additionally has a support frame (44) which is mounted so that it can be raised and lowered on the lift platform (25) and forms a receiving plane (50) which can be moved by a lift drive (45) between a transport position and a fixed position approximately on the same level as or below the plane formed by the transport unit (26) at the top face (51), and in the transport position, the receiving plane (50) is disposed above the end stops (55) and in the fixed position the loading aid (20) is disposed between the end stops (55) delimiting the receiving plane (50) and can be moved by the transport unit (26) between the lift platform (25) and the conveyor system (4, 6; 12, 14) relative to the support frame (44).

6. Device as claimed in claim 5, **characterised in that** the storage end (5) and/or despatch end (2) is formed by conveyor systems (12, 14) disposed on either side of the receiving plane (50) and forming transport planes (16, 17) which can be displaced in a transverse plane perpendicular to the conveying direction of the conveyor systems (12, 14) relative thereto in terms of their height.

7. Device as claimed in claim 6, **characterised in that** the conveyor systems (12, 14) can be displaced by lift means (21, 22) in the direction perpendicular to the transport planes (16, 17).

8. Device as claimed in claim 7, **characterised in that** a lifting height of the conveyor systems (12, 14) is higher than a construction height of a top carriage (31) of the transport unit (26) plus a height (71) of the end stops (55) extending across the top face (51) of the top carriage (31).

9. Device as claimed in claim 5 or 6, **characterised in that** the support frame (44) comprises support sections, preferably L-sections, on both sides of the top carriage (31) and extending continuously in the longitudinal direction of the transport unit (26), with two bearing legs (49) extending towards one another, and the receiving plane (50) is formed by support surfaces (72) of the bearing legs (49) extending in a plane parallel with the top face (51) of the top carriage (31) of the transport unit (26).

10. Device as claimed in claim 9, **characterised in that** the support frame (44) with the lift drive (45) is mounted so that it can be displaced in a direction perpendicular to the top face (51) of the top carriage (31) on a bearing frame (29) of the load bearing device (23).

11. Device as claimed in claim 5, **characterised in that** the lift drive (45) of the support frame (44) comprises actuator elements (67) actuated by a fluid.

12. Device as claimed in claim 5, **characterised in that** the lift drive (45) for the support frame (44) comprises actuator elements (67) operated by electric motors.

13. Device as claimed in claim 5 or 6, **characterised in that** another support frame (44) with a lift drive (45) is or are provided on the conveyor system (4) despatching the loading aid (20) and/or on the conveyor system (6) delivering the loading aid (20) in the object manipulating area, in particular in the upstream zone of the storage system (1).

14. Device as claimed in claim 13, **characterised in that** the other support frame (44) of the conveyor system (4) despatching the loading aid (20) and/or of the conveyor system (6) delivering the loading aid (20) can be displaced in the direction perpendicular to the transport plane (60) of the conveyor system (4; 6).

15. Device as claimed in one of claims 5 to 14, **characterised in that** the lift platform (25) can be displaced on a conveyor vehicle (9), preferably in a shelf loading and unloading device, in a guide mechanism with a drive system in a direction perpendicular to the receiving plane (50).

16. Device as claimed in one of claims 5 to 15, **characterised in that** the transport unit (26) of the load bearing device (23) comprises a telescopic table.

17. Device as claimed in one of claims 5 to 16, **characterised in that** the end stops (55) in the end regions of the top carriage (31) of the transport unit (26) facing the storage end (5) and/or the despatch end (2) are adjustable but stationary.

18. Device as claimed in one of claims 5 to 17, **characterised in that** a lifting height of the lift drive (45) or lift device for the receiving plane (50) corresponds to at least a part of the height of the end stops (55).

## Revendications

1. Procédé de manipulation d'au moins un moyen auxiliaire de chargement (20), en particulier un conteneur, entre un côté de chargement (5) et un côté de déchargement (2) au moyen d'un dispositif de réception de charge (23), monté sur une plate-forme de levage (25), apte à être déplacée en hauteur, avec un dispositif de transport (26), de préférence dans une zone préliminaire d'un système de stockage (1), dans lequel le dispositif de transport (26), en vue de manipuler l'article (20) reposant sur celui-ci, est déplacé dans le plan horizontal entre la position de départ sur la plate-forme de levage (25) et la position de réception ou de transfert sur le côté de déchargement ou de chargement (2, 5), et l'article (20) est positionné entre deux butées finales (55), agencées au niveau des zones d'extrémité du dispositif de transport (26), orientées vers le côté de déchargement ou de chargement (2, 5), **caractérisé en ce que**, pendant la manipulation de l'article (20), avant la réception du moyen auxiliaire de chargement (20) sur la plate-forme de levage (25) par un dispositif de convoyage (4, 6 ; 12, 14) sur le côté de déchargement ou de chargement (2, 5), un plan de réception (50) d'un bâti de support (44), monté sur la plate-forme de levage (25) et pouvant être levé et abaissé, est déplacé dans une position de transport, dans laquelle le plan de réception (50) se situe au-dessus des butées finales (55), et avant le transfert du moyen auxiliaire de chargement (20) depuis la plate-forme de levage (25) sur un dispositif de convoyage (4, 6 ; 12, 14) sur le côté de déchargement ou de chargement (2, 5), le plan de réception (50) du bâti de support (44), apte à être levé et abaissé, est déplacé dans une position d'immobilisation à peu près au même niveau que le plan formé par le dispositif de transport (26) sur le côté supérieur (51), éventuellement en dessous dudit plan, dans lequel le moyen auxiliaire de chargement (20) se situe entre les butées finales (55) délimitant le plan de réception (50), et est déplacé par le dispositif de transport (26) par rapport au bâti de support (44) entre la plate-forme de levage (25) et le dispositif de convoyage (4, 6 ; 12, 14).

2. Procédé selon la revendication 1, **caractérisé en ce que** le dispositif de réception de charge (23) est positionné entre un dispositif de convoyage (4 ; 12), monté en amont de celui-ci dans le sens de transport du moyen auxiliaire de chargement (20) et déchargeant le moyen auxiliaire de chargement (20), et le dispositif de convoyage (6 ; 14), monté en aval et transférant le moyen auxiliaire de chargement (20), et le plan de réception (50) est amené dans une position alignée avec le plan de transport (60) des dispositifs de convoyage (4, 6 ; 12, 14), à la suite de quoi au moins un moyen auxiliaire de chargement (20) est transporté dans le sens de transport vers le plan de réception (50) par le dispositif de convoyage (4 ; 12) déchargeant et, en outre, le plan de réception (50) est déplacé hors de la position de transport vers la position d'immobilisation, sachant que, dans la position de transport, le plan de réception (50) du bâti de support (44) et le plan de transport (60 ; 16, 17) d'un dispositif de convoyage (4, 6 ; 12, 14) sont alignés sur le côté de déchargement ou de chargement (2, 5).

3. Procédé selon la revendication 1 ou 2, **caractérisé en ce que**, au préalable, le plan de réception (50) avec un premier moyen auxiliaire de chargement (20), disposé sur celui-ci, est amené dans la position de transport en alignement avec le plan de transport (16), ou en dessous de celui-ci, d'un dispositif de convoyage (6) sur le côté de chargement (5), à la suite de quoi un deuxième moyen auxiliaire de chargement (20) est déplacé depuis le côté de chargement (5) vers le plan de réception (50), jusqu'à ce que le deuxième moyen auxiliaire de chargement (20) vienne buter avec une surface d'appui (63) contre une surface d'appui (63) du premier moyen auxiliaire de chargement (20), à la suite de quoi le premier moyen auxiliaire de chargement (20) sur le plan de réception (50) est déplacé par le deuxième moyen auxiliaire de chargement (20) depuis le côté de chargement (5) vers le côté de déchargement (5), sur une distance telle qu'une partie du premier moyen auxiliaire de chargement (20), poussée hors du plan de réception (50), se situe sur le plan de transport (16) sur le côté de déchargement (2), à la suite de quoi le plan de réception (50) est abaissé dans la position d'immobilisation et le deuxième moyen auxiliaire de chargement (20) est positionné entre les butées finales (55) ou contre la butée finale (55) opposée au côté de chargement (5), et dans cette position, dans laquelle est amené le deuxième moyen auxiliaire de chargement (20), le mouvement d'avance du deuxième moyen auxiliaire de chargement (20) est terminé.

4. Procédé selon la revendication 3, **caractérisé en ce que**, après le transfert du premier moyen auxiliaire de chargement (20) sur le côté de déchargement (2), celui-ci est amené vers le côté de déchargement (2) à distance du côté d'appui (64) du deuxième moyen auxiliaire de chargement (20).

5. Dispositif de manipulation d'au moins un moyen auxiliaire de chargement (20), en particulier un conteneur, entre un côté de chargement (5) et un côté de déchargement (2) au moyen d'un dispositif de réception de charge (23), de préférence dans une zone préliminaire d'un système de stockage (1), en particulier pour la mise en oeuvre du procédé selon l'une quelconque des revendications 1 à 4, lequel dispositif de réception de charge (23) est monté sur une plate-forme de levage (25), apte à être déplacée en hauteur, et comporte un dispositif de transport (26) destiné à manipuler l'article (20), reposant sur celui-ci, dans le plan horizontal entre la position de départ sur la plate-forme de levage (25) et la position de réception et de transfert sur le côté de déchargement ou chargement (2, 5), sachant que le dispositif de transport (26) comporte, dans chaque zone d'extrémité orientée respectivement vers le côté de déchargement et de chargement (2, 5), une butée finale (55), entre lesquelles peut être positionné un moyen auxiliaire de chargement (20), **caractérisé en ce que** le dispositif de réception de charge (23), destiné à manipuler le moyen auxiliaire de chargement (20) entre la plate-forme de levage (25) et un dispositif de convoyage (4, 6 ; 12, 14), comporte en plus un bâti de support (44), qui est monté sur la plate-forme de levage (25) et peut être levé et abaissé et qui forme un plan de réception (50) apte à être déplacé par un système d'entraînement de levage (45) entre une position de transport et une position d'immobilisation, située à peu près au même niveau que le plan formé sur le côté supérieur (51) du dispositif de transport (26), éventuellement en dessous dudit plan, sachant que dans la position de transport, le plan de réception (50) se situe au-dessus des butées finales (55) et, dans la position d'immobilisation, le moyen auxiliaire de chargement (20) se situe entre les butées finales (55) délimitant le plan de réception (50) et peut être déplacé par le dispositif de transport (26) entre la plate-forme de levage (25) et le dispositif de convoyage (4, 6 ; 12, 14).

6. Dispositif selon la revendication 5, **caractérisé en ce que** le côté de chargement (5) et/ou le côté de déchargement (2) est formé par les dispositifs de convoyage (12, 14), disposés de part et d'autre du plan de réception (50), et, dans un plan vertical, perpendiculairement à la direction de transport des dispositifs de convoyage (12, 14), forment des plans de transport (16, 17) réglables en hauteur par rapport à ces derniers.

7. Dispositif selon la revendication 6, **caractérisé en ce que** les dispositifs de convoyage (12, 14) peuvent être déplacés dans une direction perpendiculaire aux plans de transport (16, 17) par l'intermédiaire de moyens de levage (21, 22).

8. Dispositif selon la revendication 7, **caractérisé en ce qu'**une hauteur de levage des dispositifs de convoyage (12, 14) est supérieure à une hauteur d'encombrement d'un chariot supérieur (31) du dispositif de transport (26) plus une hauteur (71) des butées finales (55) s'avançant au-delà du côté supérieur (51) du chariot supérieur (31).

9. Dispositif selon la revendication 5 ou 6, **caractérisé en ce que** le bâti de support (44) est formé par des profilés de support, de préférence des profilés en L, qui s'étendent vers les deux côtés du chariot supérieur (31) et de part en part dans le sens longitudinal du dispositif de transport (26) et qui comportent deux branches d'appui (49) convergeant l'une vers l'autre, les plans de réception (50) étant formés par des surfaces de support (72) des branches d'appui (49), lesquelles s'étendent dans un plan parallèle au côté supérieur (51) du chariot supérieur (31) du dispositif de transport (26).

10. Dispositif selon la revendication 9, **caractérisé en ce que** le bâti de support (44) avec le système d'entraînement de levage (45) est monté sur un cadre de support (29) du dispositif de réception de charge (23) de manière à pouvoir se déplacer dans une direction perpendiculaire au côté supérieur (51) du chariot supérieur (31).

11. Dispositif selon la revendication 5, **caractérisé en ce que** le système d'entraînement de levage (45) du bâti de support (44) est formé par des éléments de réglage (67) sollicités par un fluide.

12. Dispositif selon la revendication 5, **caractérisé en ce que** le système d'entraînement de levage (45) du bâti de support (44) est formé par des éléments de réglage (67) actionnés par un moteur électrique.

13. Dispositif selon la revendication 5 ou 6, **caractérisé en ce que**, dans la zone de manipulation de l'article, en particulier dans la zone préliminaire du système de stockage (1), un bâti de support (44) supplémentaire est monté, conjointement avec le système d'entraînement de levage (45), sur le dispositif de convoyage (4) déchargeant le moyen auxiliaire de chargement (20) et/ou le dispositif de convoyage (6) transférant le moyen auxiliaire de chargement (20).

14. Dispositif selon la revendication 13, **caractérisé en ce que** le bâti de support (44) supplémentaire du dispositif de convoyage (4) déchargeant le moyen auxiliaire de chargement (20) et/ou du dispositif de convoyage (6) transférant le moyen auxiliaire de chargement (20) peut être déplacé dans une direction perpendiculaire au plan de transport (60) du dispositif de convoyage (4 ; 6).

15. Dispositif selon l'une quelconque des revendications 5 à 14, **caractérisé en ce que** la plate-forme de levage (25) peut être déplacée sur un véhicule de convoyage (9), de préférence un dispositif de manoeuvre dans les rayonnages, dans un dispositif de guidage avec un dispositif d'entraînement dans une direction perpendiculaire au plan de réception (50).

16. Dispositif selon l'une quelconque des revendications 5 à 15, **caractérisé en ce que** le dispositif de transport (26) du dispositif de réception de charge (23) est formé par une table télescopique.

17. Dispositif selon l'une quelconque des revendications 5 à 16, **caractérisé en ce que** les butées finales (55) peuvent être réglées dans les zones d'extrémité, orientées vers le côté de chargement (5) et/ou le côté de déchargement (2), du chariot supérieur (31) du dispositif de transport (26), mais sont montées de manière immobile.

18. Dispositif selon l'une quelconque des revendications 5 à 17, **caractérisé en ce qu'**une hauteur de levage du système d'entraînement de levage (45) ou du dispositif de levage pour le plan de réception (50) correspond au moins à une partie de la hauteur des butées finales (55).
